# EUROPEAN PATENT SPECIFICATION

(11) **EP 1 058 032 B1**
(45) Date of publication and mention of the grant of the patent: **27.10.2004**
(21) Application number: 99125445.9
(22) Date of filing: 20.12.1999
(51) Int. Cl.: F16H 48/22

(54) **Device with differential**
Vorrichtung mit Differential
Dispositif avec différentiel

(30) Priority: 03.06.1999 KR 9920502
(43) Date of publication of application: 06.12.2000
(73) Proprietor: Hyundai Motor Company, Seoul (KR)
(72) Inventor: Kam, Jeong-Heon, Kunpo-city, Kyungki-do (KR)
(74) Representative: Viering, Jentschura & Partner

(56) References cited:
- EP-A- 0 612 929
- GB-A- 1 280 840
- US-A- 3 326 064
- US-A- 4 757 727
- US-A- 4 781 078
- PATENT ABSTRACTS OF JAPAN vol. 016, no. 446 (M-1311), 17 September 1992 (1992-09-17) -& JP 04 154431 A (KOYO SEIKO CO LTD), 27 May 1992 (1992-05-27)

## Description

The present invention relates to a device comprising a differential and, more particularly, to a device that can generate higher differential torque.

Generally, a limited slip differential performs an additional function over that of a standard differential; that is, it provides more driving force to the wheel with traction when one wheel begins to spin.

A limited slip differential can be classified into shaft-housing types and shaft-shaft types. The former is designed such that a differential case and a drive cam are integrally rotated, and the latter is designed such that a pinion shaft of a planetary gear unit and a drive cam are integrally rotated. Accordingly, the former is generally used in vehicles that require relatively low-torque while the latter is generally used in vehicles that require relatively high torque.

However, in recent years, as vehicles are used for multiple purposes, a limited slip differential with enhanced in performance is desired.

EP-A-0 612 929 discloses a limited slip differential comprising the features of the preamble of claims 1 and 2: a differential case, a drive body, a cam assembly and a multi-plate clutch assembly, wherein the cam assembly includes first and second cam rings and rolling members and is operated by a solenoid.

Accordingly, there is a need for limited slip differentials that can enhance limited differential torque so that the same can be effectively used for various types of vehicles such as regular automobiles, sports cars, and sports utility vehicles.

According to the invention, this is achieved by a limited slip differential according to the features of claim 1 or 2. Advantageous further embodiments are described in the subclaims.

The accompanying drawings, which are incorporated in and constitute a part of the specification, illustrate embodiments of the invention, and, together with the description, serve to explain the principles of the invention;
Fig. 1 is a sectional view of a limited slip differential according to a first embodiment of the present invention;
Fig. 2 is a sectional view of a limited slip differential according to a second embodiment of the present invention;
Fig. 3 is a schematic view of a cam mechanism depicted in Figs. 1 and 2; and
Fig. 4 is a sectional view of a clutch plate depicted in Figs. 1 and 2.

A preferred embodiment of the present invention will now be described in detail with reference to the accompanying drawings. The terms "front" and "rear" as used herein shall mean and refer to the respective forward and rearward directions of the vehicle body.

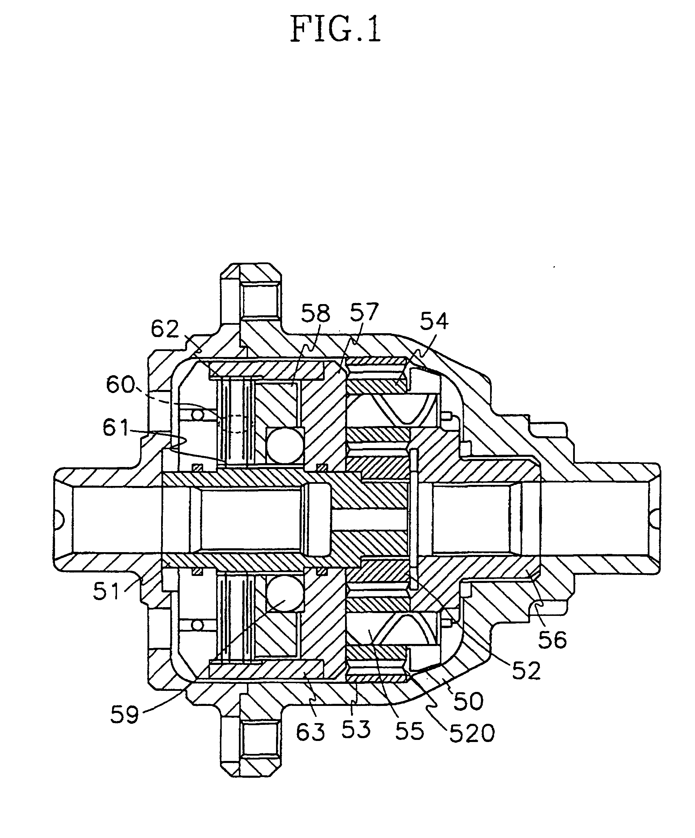

Fig. 1 shows a limited slip differential according to a first embodiment of the present invention.

The inventive device comprises a differential case 50 having a central axis. The differential case 50 is connected to an input shaft of an engine (not shown) to rotate therewith. A drive body 51 is coaxially disposed within the differential case 50 while being engaged with a planetary gear unit 520. The planetary gear unit 520 comprises a sun gear 52 engaged with an front outer circumference of the drive body 51, a plurality of pinion gears 54 engaged with an outer circumference of the sun gear 52 while being engaged with a ring gear 53 integrally formed on an inner circumference of the differential case 50. The plurality of pinion gears 54 are supported by pinion shafts 55, front ends of which are fixedly supported by a carrier 56 and rear ends of which are fixed by a drive cam 57 disposed around the drive body 51 at a rear side of the planetary gear unit 520. A piston cam 58 is disposed adjacent to the drive cam 57 around the drive body 51 to be driven by drive cam 57. Disposed between the drive cam 57 and the piston cam 58 are balls 59 which move the piston cam 58 rearward depending on the operation of the drive cam 57. A multi-plate clutch assembly 60 comprises outer plates 62 connected to the drive cam 57 and inner plates 61 connected to the drive body 51, the inner and outer plates 61 and 62 being alternately disposed.

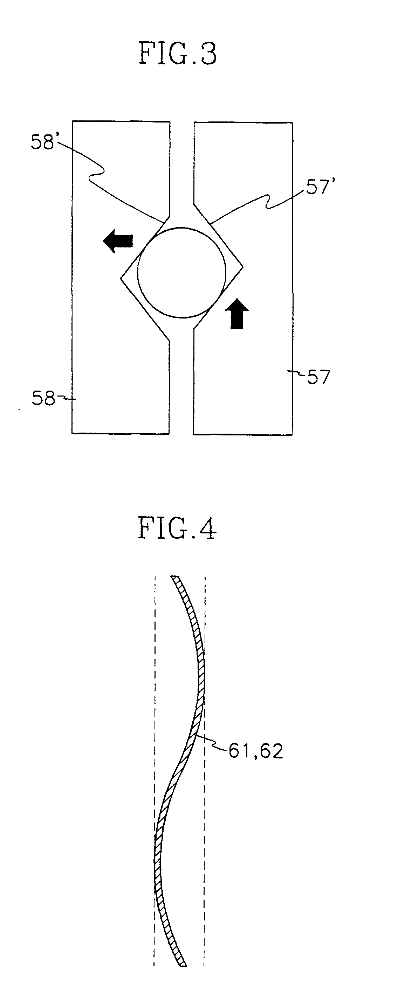

As shown in Fig. 3, recesses 57' and 58' are formed facing each other on the drive cam 57 and the piston cam 58, respectively. The recesses 57' and 58' define featheredge spaces in which the balls 59 are disposed. Accordingly, when the drive cam 57 moves in a radial direction, the piston cam 58 is urged rearward along the central axis.

Accordingly, the multi-plate clutch assembly 60 is compressed or released according to the movement of the piston cam 58 in the direction of the central axis. Each of the inner and outer plates 61 and 62 is designed to have an S-shaped section so that the multi-plate clutch assembly 60 can be returned to its initial position when an urging force of the piston cam 58 is released.

The operation of the above described device will be described in detail hereinbelow.

When the vehicle is in a turn, a differential action is performed by the planetary gear unit 520. Additionally, when a speed difference occurs between two drive wheels in a state where the vehicle is normally driving, a limited slip differential action is also performed by the cams 57 and 58.

Since the differential action is the same as that of the prior art, the description thereof will be omitted herein. The limited slip differential action will be described in detail hereinbelow.

When a speed difference occurs between the drive wheels, a speed difference also occurs between the piston cam 58 and the drive cam 57. As a result, the drive cam 57 is moved in a radial direction, and the piston cam 58 is urged leftward as illustrated in Fig. 3 by the movement of the drive cam 57. That is, as the balls 59 disposed within the featheredge spaces defined by the recesses 57' and 58' formed respectively on the drive cam 57 and the piston cam 58 are displaced along the recesses 57' and 58', the piston cam 58 is urged leftward.

As a result, the clutch plates 61 and 62 of the multi-plate clutch assembly 60 are engaged with each other, thereby generating frictional torque between the clutch plates 61 and 62, which functions as limited slip differential torque.

When the speed between the drive wheels becomes equalized, the piston cam 58 moves rightward by spring force of the clutch plates 61 and 62 having the S-shaped section, and the frictional torque between the clutch plates 61 and 62 disappears.

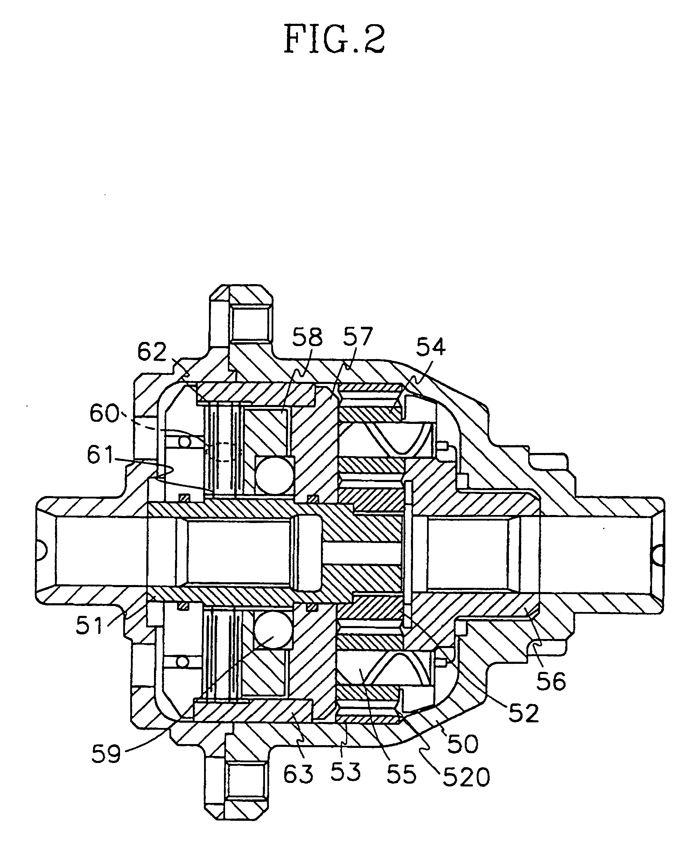

Fig. 2 shows a limited slip differential according to a second embodiment of the present invention.

In this embodiment, a drive cam 57 is integrated with a fixing member 63 fixed on an inner circumference of the differential case 50, and the pinion shaft 55 is not fixed by the drive cam 57. That is, the drive cam 57 is operated by a rotating difference between the drive body 51 and the differential case 50. At this point, the outer plate 62 is coupled to the fixing member 63 to transmit frictional torque generated by a multi-plate clutch assembly 60 to the differential case 50 via the fixing member 63.

While this invention has been described in connection with what is presently considered to be the most practical and preferred embodiment, it is to be understood that the invention is not limited to the disclosed embodiment, but, on the contrary, is intended to cover various modifications and equivalent arrangements included within the scope of the appended claims.

## Claims

1. A device comprising:
a rotatable differential case (50) having a central axis, the differential case (50) including a ring gear (53) integrally formed on an inner circumference thereof;
a drive body (51) coaxially disposed within the differential case (50);
a planetary gear unit (520) disposed within the differential case (50), the planetary gear unit (520) including a sun gear (52) engaged with the drive body (51), a pinion gear (54) engaged with both the sun gear (52) and the ring gear (53), a pinion shaft (55) rotatably supporting the pinion gear (54), and a carrier (56) integrally connected to the pinion shaft (55);
a cam assembly for performing a differential action depending on a speed difference generated by the planetary gear unit (520); and
a multi-plate clutch assembly (60) having at least one outer plate (62) connected to the cam assembly and at least one inner plate (61) connected to the drive body (51),
**characterised in that** the cam assembly comprises a drive cam (57) fixedly connected to the pinion shaft (55), the outer plate (62) being connected to the drive cam (57), a piston cam (58) slidably connected to the drive body (51), and a ball member (59) that is disposed between the drive cam (57) and the piston cam (58) such that the ball member (59) urges the piston cam (58) to move toward the multi-plate clutch assembly (60) to engage the inner and the outer plates (61, 62) with each other depending on a speed difference between the drive cam (57) and the piston cam (58).

2. A device comprising:
a rotatable differential case (50) having a central axis, the differential case (50) including a ring gear (53) integrally formed on an inner circumference thereof;
a drive body (51) coaxially disposed within the differential case (50);
a planetary gear unit (520) disposed within the differential case (50), the planetary gear unit (520) including a sun gear (52) engaged with the drive body (51), a pinion gear (54) engaged with both the sun gear (52) and the ring gear (53), a pinion shaft (55) rotatably supporting the pinion gear (54), and a carrier (56) integrally connected to the pinion shaft (55);
a cam assembly for performing a differential action depending on a speed difference generated by the planetary gear unit (520); and
a multi-plate clutch assembly (60) having at least one outer plate (62) connected to the cam assembly and at least one inner plate (61) connected to the drive body (51),
**characterised in that** the cam assembly comprises a drive cam (57) fixedly connected to the differential case (50), the outer plate (62) being connected to the drive cam (57), a piston cam (58) slidably connected to the drive body (51), and a ball member (59) that is disposed between the drive cam (57) and the piston cam (58) such that the ball member (59) urges the piston cam (58) to move toward the multi-plate clutch assembly (60) to engage the inner and the outer plates (61, 62) with each other depending on a speed difference between the drive cam (57) and the piston cam (58).

3. The device of claim 1 or 2, wherein recesses (57', 58') are formed facing each other respectively on the drive cam (57) and the piston cam (58), the recesses (57', 58') defining a featheredge space, and the ball member (59) is disposed within the featheredge space such that the ball member (59) urges the piston cam (58) to move toward the multi-plate clutch assembly (60) to engage the inner and outer plates (61, 62) with each other when the drive cam (57) and the piston cam (58) rotate at different speeds.

4. The device of any of claims 1-3, wherein each of the inner and outer plates (61, 62) has an S-shaped section so that the multi-plate clutch assembly (60) can be returned to an initial position when an urging force of the cam assembly is released.

## Patentansprüche

1. Vorrichtung aufweisend:
ein drehbares Differenzialgehäuse (50) mit einer zentralen Achse, wobei das Differenzialgehäuse (50) ein Hohlrad (53) aufweist, das integral an einem inneren Umfang davon ausgebildet ist,
einen Antriebskörper (51), der koaxial innerhalb des Differenzialgehäuses (50) angeordnet ist,
eine Planetengetriebeeinheit (520), die innerhalb des Differenzialgehäuses (50) angeordnet ist, wobei die Planetengetriebeeinheit (520) ein Sonnenrad (52), das mit dem Antriebskörper (51) im Eingriff ist, ein Planetenrad (54), das mit sowohl dem Sonnenrad (52) als auch dem Hohlrad (53) im Eingriff ist, einen Planetenschaft (55), der das Planetenrad (54) drehbar trägt, und einen Träger (56) aufweist, der integral mit dem Planetenschaft (55) verbunden ist,
eine Mitnehmeranordnung zum Durchführen einer Differenzialaktivität in Abhängigkeit von einer Geschwindigkeitsdifferenz, die durch die Planetengetriebeeinheit (520) erzeugt wird, und
eine Mehrfach-Scheiben-Kupplungsanordnung (60) mit zumindest einer äußeren Scheibe (62), die mit der Mitnehmeranordnung verbunden ist, und zumindest einer inneren Scheibe (61), die mit dem Antriebskörper (51) verbunden ist,
**dadurch gekennzeichnet, dass** die Mitnehmeranordnung einen Antriebsmitnehmer (57), der fest mit dem Planetenschaft (55) verbunden ist, wobei die äußere Scheibe (62) mit dem Antriebsmitnehmer (57) verbunden ist, einen Kolbenmitnehmer (58), der verschiebbar mit dem Antriebskörper (51) verbunden ist, und ein Kugelelement (59) aufweist, das zwischen dem Antriebsmitnehmer (57) und dem Kolbenmitnehmer (58) angeordnet ist, so dass das Kugelelement (59) den Kolbenmitnehmer (58) zwingt, sich in Richtung der Mehrfach-Scheiben-Kupplungsanordnung (60) zu bewegen, so dass die innere und die äußere Scheibe (61, 62) abhängig von der Geschwindigkeitsdifferenz zwischen dem Antriebsmitnehmer (57) und dem Kolbenmitnehmer (58) miteinander im Eingriff sind.

2. Vorrichtung aufweisend:
ein drehbares Differenzialgehäuse (50) mit einer zentralen Achse, wobei das Differenzialgehäuse (50) ein Hohlrad (53) aufweist, das integral an einem inneren Umfang davon ausgebildet ist,
einen Antriebskörper (51), der koaxial in dem Differenzialgehäuse (50) angeordnet ist,
eine Planetengetriebeeinheit (520), die in dem Differenzialgehäuse (50) angeordnet ist, wobei die Planetengetriebeeinheit (520) ein Sonnenrad (52), das mit dem Antriebskörper (51) im Eingriff ist, ein Planetenrad (54), das mit sowohl dem Sonnenrad (52) als auch dem Hohlrad (53) im Eingriff ist, einen Planetenschaft (55), der das Planetenrad (54) drehbar trägt, und einen Träger (56) aufweist, der integral mit dem Planetenschaft (55) verbunden ist,
eine Mitnehmeranordnung zum Ausführen einer Differenzialaktivität abhängig von einer Geschwindigkeitsdifferenz, die durch die Planetengetriebeeinheit (520) erzeugt wird, und
eine Mehrfach-Scheiben-Kupplungsanordnung (60) mit zumindest einer äußeren Scheibe (62), die mit der Mitnehmeranordnung verbunden ist, und zumindest einer inneren Scheibe (61), die mit dem Antriebskörper (51) verbunden ist,
**dadurch gekennzeichnet, dass** die Mitnehmeranordnung einen Antriebsmitnehmer (57), der fest mit dem Differenzialgehäuse (50) verbunden ist, wobei die äußere Scheibe (62) mit dem Antriebsmitnehmer (57) verbunden ist, einen Kolbenmitnehmer (58), der verschiebbar mit dem Antriebskörper (51) verbunden ist, und ein Kugelelement (59) aufweist, das zwischen dem Antriebsmitnehmer (57) und dem Kolbenmitnehmer (58) angeordnet ist, so dass das Kugelelement (59) den Kolbenmitnehmer (58) zwingt, sich in Richtung der Mehrfach-Scheiben-Kupplungsanordnung (60) zu bewegen, um die innere und die äußere Scheibe (61, 62) abhängig von einer Geschwindigkeitsdifferenz zwischen dem Antriebsmitnehmer (57) und dem Kolbenmitnehmer (58) miteinander in Eingriff zu bringen.

3. Vorrichtung nach Anspruch 1 oder 2, wobei an dem Antriebsmitnehmer (57) und dem Kolbenmitnehmer (58) jeweils sich gegenüberliegende Aussparungen (57', 58') ausgebildet sind, wobei die Aussparungen (57', 58') einen spitz zulaufenden Raum definieren und das Kugelelement (59) in dem spitz zulaufenden Raum angeordnet ist, so dass das Kugelelement (59) den Kolbenmitnehmer (58) zwingt, sich in Richtung der Mehrfach-Scheiben-Kupplungsanordnung (60) zu bewegen, um die innere und äußere Scheibe (61, 62) miteinander in Eingriff zu bringen, wenn der Antriebsmitnehmer (57) und der Kolbenmitnehmer (58) mit unterschiedlichen Geschwindigkeiten rotieren.

4. Vorrichtung nach einem der Ansprüche 1-3, wobei jede der inneren und äußeren Scheibe (61, 62) einen S-förmigen Abschnitt aufweist, so dass die Mehrfach-Scheiben-Kupplungsanordnung (60) in eine Eingangsposition zurückkehren kann, wenn eine Drängkraft der Mitnehmeranordnung gelöst wird.

## Revendications

1. Dispositif, comportant :
un carter de différentiel rotatif (50) ayant un axe central, le carter de différentiel (50) comportant une couronne (53) formée en un seul bloc sur une circonférence intérieure de celui-ci,
un corps d'entraînement (51) disposé coaxialement dans le carter de différentiel (50),
une unité de train planétaire (520) disposée dans le carter de différentiel (50), l'unité de train planétaire (520) comportant un planétaire (52) en prise avec le corps d'entraînement (51), un pignon (54) en prise avec le planétaire (52) et la couronne (53), un arbre de pignon (55) supportant le pignon (54) de manière rotative, et un support (56) connecté en un seul bloc à l'arbre de pignon (55),
un ensemble de cames pour effectuer une action différentielle selon une différence de vitesse générée par l'unité de train planétaire (520), et
un ensemble d'embrayage à plusieurs disques (60) ayant au moins un disque extérieur (62) connecté à l'ensemble de cames, et au moins un disque intérieur (61) connecté au corps d'entraînement (51),
**caractérisé en ce que** l'ensemble de cames comporte une came d'entraînement (57) connectée de manière fixe à l'arbre de pignon (55), le disque extérieur (62) étant connecté à la came d'entraînement (57), une came de piston (58) connectée de manière coulissante au corps d'entraînement (51), et un élément formant bille (59) qui est disposé entre la came d'entraînement (57) et la came de piston (58), de telle sorte que l'élément formant bille (59) pousse la came de piston (58) à se déplacer vers l'ensemble d'embrayage à plusieurs disques (60) pour mettre en prise les disques intérieur et extérieur (61, 62) l'un avec l'autre selon une différence de vitesse entre la came d'entraînement (57) et la came de piston (58).

2. Dispositif, comportant :
un carter de différentiel rotatif (50) ayant un axe central, le carter de différentiel (50) comportant une couronne (53) formée d'un seul tenant sur une circonférence intérieure de celui-ci,
un corps d'entraînement (51) disposé coaxialement dans le carter de différentiel (50),
une unité de train planétaire (520) disposée dans le carter de différentiel (50), l'unité de train planétaire (520) comportant un planétaire (52) en prise avec le corps d'entraînement (51), un pignon (54) en prise avec le planétaire (52) et la couronne (53), un arbre de pignon (55) supportant le pignon (54) de manière rotative, et un support (56) connecté d'un seul tenant à l'arbre de pignon (55),
un ensemble de cames pour effectuer une action différentielle selon une différence de vitesse générée par l'unité de train planétaire (520), et
un ensemble d'embrayage à plusieurs disques (60) ayant au moins un disque extérieur (62) connecté à l'ensemble de cames, et au moins un disque intérieur (61) connecté au corps d'entraînement (51),
**caractérisé en ce que** l'ensemble de cames comporte une came d'entraînement (57) connectée de manière fixe au carter de différentiel (50), le disque extérieur (62) étant connecté à la came d'entraînement (57), une came de piston (58) connectée de manière coulissante au corps d'entraînement (51), et un élément formant bille (59) qui est disposé entre la came d'entraînement (57) et la came de piston (58), de telle sorte que l'élément formant bille (59) pousse la came de piston (58) à se déplacer vers l'ensemble d'embrayage à plusieurs disques (60) pour mettre en prise les disques intérieur et extérieur (61, 62) l'un avec l'autre selon une différence de vitesse entre la came d'entraînement (57) et la came de piston (58).

3. Dispositif selon la revendication 1 ou 2, dans lequel des évidements (57', 58') sont formés en vis-à-vis l'un de l'autre respectivement sur la came d'entraînement (57) et la came de piston (58), les évidements (57', 58') définissant un espace en biseau, et l'élément formant bille (59) est disposé dans l'espace en biseau, de telle sorte que l'élément formant bille (59) pousse la came de piston (58) à se déplacer vers l'ensemble d'embrayage à plusieurs disques (60) pour mettre en prise les disques intérieur et extérieur (61, 62) l'un avec l'autre lorsque la came d'entraînement (57) et la came de piston (58) tournent à des vitesses différentes.

4. Dispositif selon l'une quelconque des revendications 1 à 3, dans lequel chacun des disques intérieur et extérieur (61, 62) a une section en forme de S, de sorte que l'ensemble d'embrayage à plusieurs disques (60) peut être renvoyé vers une position initiale lorsqu'une force de poussée de l'ensemble de cames est libérée.
